(19) Europäisches Patentamt
European Patent Office
Office européen des brevets

(11) Publication number: **0 226 344 A2**

(12) **EUROPEAN PATENT APPLICATION**

(21) Application number: 86309007.2

(22) Date of filing: 18.11.86

(51) Int. Cl.⁴: B 01 J 20/32
G 03 C 5/395

(30) Priority: 21.11.85 US 800326

(43) Date of publication of application: 24.06.87 Bulletin 87/26

(84) Designated Contracting States: AT BE CH DE ES FR GB GR IT LI LU NL SE

(71) Applicant: DeVoe-Holbein International N.V.
c/o First Guarantee Trust N.V. 18 Petermaai Box 253
Curaçao(AN)

(72) Inventor: Browne, Eric N. C.
307-740 Place Fortier
St. Laurent Quebec, H4L 5A9(CA)

(72) Inventor: Brener, David
5547 Ashdale
Cote St. Luc Quebec, H4W 2R7(CA)

(72) Inventor: Greer, Charles W.
4129 de Maisonneuve, apt. 3
Westmount Quebec, H3Z 1K2(CA)

(72) Inventor: DeVoe, Irving W.
Avenue Winston Churchill
B-1180 Brussels(BE)

(72) Inventor: Holbein, Bruce E.
Avenue des Croix du Feu, apt. 27
B-1410 Waterloo(BE)

(72) Inventor: Van der Vlist, Edo
Koestratt 37
NL-2231 JE Rijnsburg(NL)

(74) Representative: Harding, Richard Patrick et al,
Arthur R. Davies & Co. 27 Imperial Square
Cheltenham GL50 1RQ(GB)

# (54) Insoluble composition for removing silver from a liquid medium.

(57) For the removal of silver from a liquid medium an insoluble composition is used which comprises a suitable insoluble carrier and an ethylenediamine residue convalently fixed at both nitrogen atoms thereof to the surface of said carrier via separate linkages comprising at least three carbon atoms.



Croydon Printing Company Ltd

The present invention relates to a composition useful for the removal of silver from liquid media, wherein the active metal binding component comprises a residue of ethylenediamine.

Due to the toxic nature of silver e.g. $A_g^{+1}$, it is extremely important to be able to reduce to a minimum the amount discharged to the environment in liquid media. Sources of such potential polluting media are numerous; they include, for example, spent fixer solutions and rinse waters generated from photographic processing. In addition, because silver is a semi-precious metal, there is an economic benefit in the extraction, recovery and reuse of this metal whether in metallic or ionic form.

A number of metal-loving compositions which make use of amine groups to take up metal are known; see for example Canadian Patent Nos. 1,103,035, 1,102,346 and 1,102,347 and United States patent No. 4,174,319.

The present invention on the other hand provides an insoluble composition comprising:

(1) ethylenediamine covalently fixed to the surface of

(2) a suitable insoluble carrier, characterized in that ethylenediamine is fixed to the surface of said carrier by each nitrogen atom thereof, each of said nitrogen atoms being fixed to the surface of the carrier by a separate covalent linkage comprising a chain of atoms, the first three chain atoms immediately adjacent a respective nitrogen atom being carbon atoms.

The present invention, in particular, provides an insoluble composition comprising:

(1) ethylenediamine covalently fixed to the surface of,

(2) a suitable insoluble carrier,

characterized in that ethylenediamine is fixed to the surface of said carrier by each nitrogen atom thereof, each of said nitrogen atoms being fixed to the surface of the carrier by a separate covalent linkage

comprising a chain of atoms, each said chain including an additional nitrogen atom covalently linked to a respective nitrogen atom of ethylenediamine by a hydrocarbon chain of five carbon atoms.

In accordance with the present invention the hydrocarbon chain may comprise a chain of five methylene groups and the additional nitrogen atom and the respective nitrogen atom of ethylenediamine may each be linked to the hydrocarbon chain of five methylene groups by a single covalent bond.

In accordance with another aspect the present invention provides a process for the preparation of an insoluble composition comprising:

(1) ethylenediamine covalently fixed to the surface of

(2) a suitable insoluble carrier,

characterized in that ethylenediamine is fixed to the surface of said carrier by each nitrogen atom thereof, each of said nitrogen atoms being fixed to the surface of the carrier by a separate covalent linkage comprising a chain of atoms, the first three chain atoms immediately adjacent a respective nitrogens atom being carbon atoms, said process being characterized in that ethylenediamine is reacted with a suitable reactive insoluble carrier to obtain an insoluble composition as defined above.

The present invention, in particular, provides a process for the preparation of an insoluble composition comprising:

(1) ethylenediamine covalently fixed to the surface of

(2) a suitable insoluble carrier,

characterized in that ethylenediamine is fixed to the surface of said carrier by each nitrogen atom thereof, each of said nitrogen atoms being fixed to the surface of the carrrier by a separate covalent linkage comprising a chain of atoms, the first three chain atoms immediately adjacent a respective nitrogen atom being carbon

atoms, said process being characterized in that ethylenediamine is subjected to a Schiff base reaction with a suitable aldehyde activated insoluble carrier, each of the aldehyde functional groups $-\overset{\overset{O}{\|}}{C}-H$ of the carrier being fixed to the surface of the carrier by a chain of atoms, the first two atoms of said chain immediately adjacent a respective aldehyde functional group being carbon atoms, and if desired, the obtained product in subjected to a Schiff base reduction treatment with a suitable reducing agent, to obtain an insoluble composition as defined above.

The present invention also provides a process for the preparation of an insoluble composition comprising:

(1) ethylenediamine covalently fixed to the surface of,

(2) a suitable insoluble carrier,

characterized in that ethylenediamine is fixed to the surface of said carrier by each nitrogen atom thereof, each of said nitrogen atoms being fixed to the surface of the carrier by a separate covalent linkage comprising a chain of atoms, each said chain including an additional nitrogen atom covalently linked to a respective nitrogen atom of ethylenediamine by a hydrocarbon chain of five carbon atoms, said process being characterized in that ethylenediamine is subjected to a Schiff base reaction with a suitable aldehyde activated insoluble carrier, each of the aldehyde functional groups $-\overset{\overset{O}{\|}}{C}-H$ of said carrier being fixed to the surface of the carrier by a chain of atoms, each said chain including a nitrogen atom covalently linked to a respective $-\overset{\overset{O}{\|}}{C}-H$ group by a hydrocarbon chain of 4 carbon atoms, and, if desired, the obtained product is subjected to a Schiff base reduction treatment with a suitable reducing agent to obtain an insoluble composition as defined above.

The present invention further provides a process

for the preparation of an insoluble composition comprising:

(1) ethylenediamine covalently fixed to the surface of,

(2) a suitable insoluble carrier,

characterized in that ethylenediamine is fixed to the surface of said carrier by each nitrogen atom thereof, each of said nitrogen atoms being fixed to the surface of the carrier by a separate covalent linkage comprising a chain of atoms, each said chain including an additional nitrogen atom covalently linked to a respective nitrogen atom of ethylenediamine by a hydrocarbon chain of five methylene groups and wherein said additional nitrogen atom and the respective nitrogen atom of ethylenediamine are each linked to said hydrocarbon chain by a single covalent bond, said process being characterized in that

(a) a suitable amino activated carrier having amino groups covalently fixed to its surface is subjected to a Schiff base reaction with glutaraldehyde to obtain an aldehyde activated carrier each of the aldehyde functional groups $-\overset{O}{\overset{\|}{C}}-H$ of said carrier being fixed to the surface of the carrier by a chain of atoms, each said chain including a nitrogen atom covalently linked to a respective $-\overset{O}{\overset{\|}{C}}-H$ group by a hydrocarbon chain of 4 carbon atoms and

(b) said aldehyde activated carrier is then subjected to a Schiff base reaction with ethylenediamine and the obtained product is subjected to a Schiff base reduction treatment with a suitable reducing agent, to obtain an insoluble composition as defined above.

In accordance with a further aspect the present

invention provides a process for removing silver from a liquid medium, the silver being in the form of a soluble compound thereof e.g. $Ag^{1+}$ characterized in that the medium is contacted with a composition as defined above.

Compositions as defined above, loaded with silver may possibly be regenerated by chemical means suitable for the removal of the bound metal; the soregenerated composition can thereafter be recycled for further use.

The insoluble compositions in accordance with the present invention have a very high affinity for silver and can be used to remove silver from solution even if silver is present in trace amounts.

The ethylenediamine residue can be depicted as follows:

$$-HNCH_2CH_2NH-$$

As can be seen the ethylenediamine residue has two basic (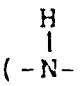) functional groups.

The insoluble composition may generally be visualized as having the following type of basic metal loving unit(s) fixed to the surface of a carrier

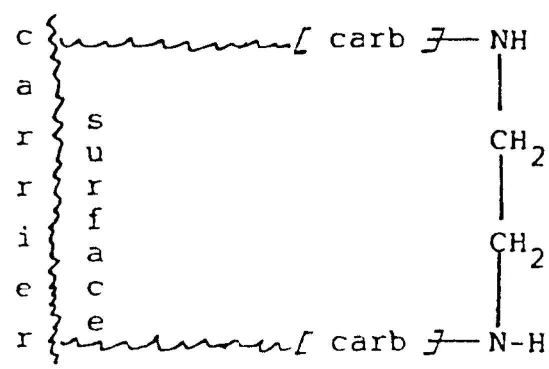

wherein "[carb]" represents a overall covalent linkage with "carb" being a chain of three carbon atoms. The covalent linkages fixing the nitrogen atoms of ethylenediamine to the carrier may, for example, terminate in Si atoms which are bound to the surface of the carrier by oxygen bonds. As can be seen each of the nitrogen atoms of ethylenediamine is fixed to the surface of the carrier by a separate covalent linkage.

Thus an insoluble composition of the present invention may, for example, be considered as comprising

(i) silver binding groups covalently fixed to the surface of,

(ii) a suitable insoluble carrier,

said silver binding groups having the formula

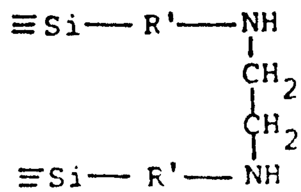

wherein each R' is a hydrocarbon chain interrupted, if desired, by one or more heteroatoms selected from the group consisting of oxygen and nitrogen, the first three atoms of each of said chains immediately adjacent a respective nitrogen atom being carbon atoms, said silver binding groups being covalently fixed to the surface of said carrier via silicon to oxygen to carrier bonds, said carrier being for example an inorganic carrier.

The process for the preparation of an insoluble composition comprising:

(i) silver binding groups covalently fixed to the surface of,

(ii) a suitable insoluble carrier,

said silver binding groups having the formula

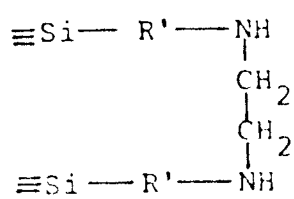

wherein each R' is a hydrocarbon chain interrupted, if desired, by one or more heteroatoms selected from the group consisting of oxygen and nitrogen, the first three atoms of each of said chains immediately adjacent a respective nitrogen atom being carbon atoms,said silver binding group being covalently fixed to the surface of said carrier via silicon to oxygen to carrier bonds, may, for example, be characterized

in that ethylenediamine is reacted with a suitable reactive insoluble carrier, said reactive carrier having covalently fixed to its surface reactive groups of formula

$$\equiv Si - R'' - fcn$$

wherein R" is a hydrocarbon chain interrupted, if desired, by one or more heteroatoms selected from the group consisting of oxygen and nitrogen, and $f$cn is a functional group reactive with the amino groups of ethylenediamine to covalently fix ethylenediamine to said carrier at both nitrogen atoms thereof, said reactive groups being fixed to the surface of said carrier via silica to oxygen to carrier bonds, said group $- R'' - f$cn being reacted with ethylenediamine to form silver binding groups having the formula

$$\begin{array}{l} \equiv Si - R' - NH \\ \qquad\qquad\quad | \\ \qquad\qquad\quad CH_2 \\ \qquad\qquad\quad | \\ \qquad\qquad\quad CH_2 \\ \qquad\qquad\quad | \\ \equiv Si - R' - NH \end{array}$$

as defined above.

The carrier can be organic or inorganic in nature. For example, the carrier may be a natural or modified natural polymer (e.g. lignin, agar, alignate, glucan, cellulose, dextran, cellulose acetate, humic acid, etc.) or a synthetic organic polymer (e.g. a polyamide, a polyamine, a polyacrylamide, a polyester, a polyurethane, a polyethylene, a polystyrene, a polypropylene, a polycarbonate, a silicone, nylon, latex, a polyfluoroolefin, etc.). An inorganic material is, however, preferred (e.g. ceria, titania, alumina, yttria, sepiolite or other such materials having surface hydroxyl groups).

A carrier suitable in accordance with the present

invention, must of course be insoluble in the liquid medium of intended use; for example, the carrier can be water insoluble. Desirably, the carrier is also inert in the liquid medium of intended use. The carriers can be in particulate or solid form.

Any suitable means of covalently fixing organic coordinating sites to a carrier can be used to prepare the compositions provided that the necessary metal chelating or metal binding activity of the composition is maintained. As indicated above the process of preparation is carried out such that the, ethylenediamine residue is covalently fixed via both of its nitrogen atoms to the surface of the carrier. Ethylenediamine can be bound in this manner to an aldehyde activated silica gel via Schiff base reaction.

Other known processes are also suitable for the binding of ethylenediamine to carriers so as to preserve the chelating or complexing properties thereof. For example, the commonly used methods for covalently binding enzymes to insoluble carriers can be adapted for the immobilization of ethylenediamine. See, for example "Methods of Enzymology", XXXIV E:30 (Jakoby W.B. Ed.) Academic Press, New York (1974).

Carriers which may advantageously be used for the process of preparing compositions are those which already have active surfaces; the active surfaces having functional groups which can react with the amino groups of ethylenediamine. The functional group can, for example, be selected from the class consisting of $-\overset{O}{\overset{\|}{C}}-OH$, $-\overset{O}{\overset{\|}{C}}-H$, $-CH_2-X$, X being a halogen atom, for example, Br, or $-\overset{O}{\overset{\|}{C}}-X$, X being, as defined above, $-\overset{O}{\overset{\|}{C}}-N^3$, $-SO_3H$, and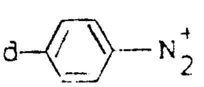. Any functional group can of course be used which can be made to react with the amino groups of ethylenediamine to bind ethylenediamine to the

carrier, the obtained composition having metal chelating or metal binding activity.

A useful carrier may need to have its surface treated in order to provide the surface with a suitable functional group which can bond to ethylenediamine. An inorganic carrier having surface hydroxyl groups may, for example, be treated with a suitable amino silane to obtain an amino activated carrier which can in turn be treated with a bifunctiional compound to provide the carrier with a functional group which can react with the amino groups of ethylenediamine. The aminosilane may, for example, have the following formula

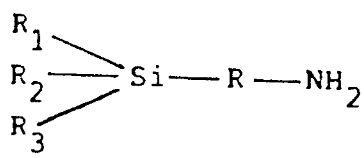

wherein R is a divalent organic radical of up to 20 carbon atoms (e.g. alkylene of up to 20 carbon atoms) and $R_1$, $R_2$ and $R_3$ are independently selected from the class consisting of a hydrogen atom, a halogen atom (e.g. Cl), a $C_{1-20}$ alkyl group, a $C_{1-20}$ alkyl group substituted by a $C_{6-14}$ aryl group, a $C_{6-14}$ aryl group and an $OR_4$ group, $R_4$ being a hydrogen atom or an organic radical of up to 20 carbon atoms (e.g. $C_{1-20}$ alkyl), provided that at least one of $R_1$, $R_2$ and $R_3$ is a halogen atom or an $-OR_4$ group. The aryl group or moiety thereof can be mono, di or tri-cyclic e.g. phenyl, naphthyl, benzyl etc.

Thus silica (e.g. in the form of a silica gel) having surface hydroxyl groups can, for example, be pre-treated with a suitable ω-amino-($C_2$ to $C_{10}$ alkyl)-tri-($C_1$ to $C_5$ alkoxy) silane to provide an active surface comprising amino groups. The silane can, for example, be γ-aminopropyltriethoxysilane. See, for example, the following patents wherein silica is treated with a silane: Canadian Patent Nos. 1,102,347, 1,103,,035 and 1,102,346; U.S. Patent

Nos. 4,203,952, 3,886,080, 3,904,373, 3,519,538, 3,652,761, 4,230,803 and 4,290,892.

An obtained amino activated silica gel can be reacted with a suitable bifunctional compound to provide the gel with a functional group capable of reacting with the amino groups of ethylenediamine. Suitable bifunctional compounds include dialdehydes such as α,ω -(diformyl) alkanes, α,ω-(dihalo)alkanes, dicarboxylic acids and reactive derivatives of the latter such as acid halides, anhydrides, esters, etc. The acids can be α,ω-(dicarboxyl)alkanes. The alkyl moieties of the above referred to compounds can have up to 20 carbon atoms.

An amine activated silica gel is, of course, reacted with a bifunctional compound such as a dialdehyde or dicarboxylic acid under reaction conditions which favour the reaction between one of the aldehyde or carboxylic acid groups with a carrier amino group while leaving the other functional group of the compound free for subsequent reaction with an amino group of ethylenediamine. Thus, a stoichiometric excess of a dialdehyde compound can be contacted with an amino activated silica gel to form an aldehyde activated carrier. The molar ratio of dialdehyde to carrier amino groups may for example range from 2.5:1 to 10:1, preferably 3:1 to 4:1. In any event molar ratios must be chosen which favour the formation of a suitable activated carrier.

An activated carrier in its turn must be reacted with ethylenediamine under such conditions as will favour the reaction of both amino groups thereof with respective functional groups fixed to the carrier. Thus an activated carrier can be reacted with a stoichiometric amount or less of ethylenediamine by slowly contacting the carrier (i.e. dropwise) with a suitably diluted solution of ethylenediamine until the desired amount of diamine has been added. The molar ratio of diamine to carrier functional groups may be 1:2 or less e.g. 1:2 to 1:4; a stoichiometric amount of

diamine is preferred since it will tend to make use of all available reaction sites.

A dialdehyde, such as glutaraldehyde, may, for example, be used to provide a carrier having 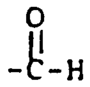 functional groups which can be made to react with the amino groups of ethylenediamine via a Schiff base reaction, the obtained product being, preferably stabilized by being subjected to a Schiff base reduction treatment. In accordance with the Schiff base reduction treatment the group 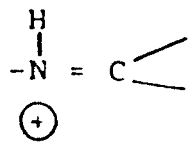 is reduced to the group 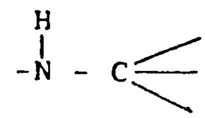. The reduction treatment can be effected with any suitable reducing agent, for example, an hydride such as sodium borohydride. In the absence of the stabilization treatment the composition has a tendency to undergo hydrolysis depending on the conditions of use, with attendent loss of metal loving activity .

It is also possible to put some distance between ethylenediamine residues and the surface of the carrier, in order to limit the effect on the residue of a surface characteristic of the carrier. For example, teflon may be used as a carrier. However, teflon has a highly hydrophobic surface which is non-wetting. Therefore, it is desirable to put some distance between the surface of the teflon and the ethylenediamine residues to allow the residues to extend well into an aqueous liquid medium.

A spacer compound may be used to provide a spacer group to space apart a carrier and ethylenediamine residues. A suitable spacer compound can be a bifunctional compound such as referred to above; i.e. it has a functional group which can react with a functional group of the carrier (e.g. hydroxyl, amino, aldehyde etc.) to bind it thereto; and it has also a second functional group which can react with the

amino groups of ethylenediamine to bind ethylenediamine thereto: see the above functional groups. The spacer group may alternatively have a second functional group which while not reactive with the amino groups of ethylenediammine, may be convertible into such a group.

A spacer compound can, for example, in addition to the above referred to functional groups, include a hydrocarbon chain, the length of which is chosen in accordance with the distance which it is desired to place between the carrier and the compound. The spacer compound used may for example be 1-ethyl-3-(3-dimethylaminopropyl) carbodiimide hydrochloride salt or a straight chain dialdehyde of up to 20 carbon atoms such as glutaraldehyde. However any compound can be used which will space the compound from the carrier, the necessary or desired distance provided of course that it is bifunctional.

The spacer compound may be bound, to a carrier by making use of conventional reactions involving the formation of ester groups, amide groups, amino groups, diazo groups, ether groups, sulphonamide groups, amidino groups; the reaction may be a carbon-carbon condensation.

Thus a suitable carrier for the present invention may be represented generally by the formula

$$\text{back}-\left[-R''-ƒ\text{cn}\right]_n$$

wherein n is an integer, "back" is a carrier backbone, R", ƒcn and the group -R"-ƒcn are as defined above. For example "ƒcn" may be a -COOH group or a $-\overset{O}{\overset{\|}{C}}-H$ group and R may be a hydrocarbon group e.g. alkylene group of 2 to 20 carbon atoms such as butylene.

The carrier employed can have a porous structure preferably having a large specific surface. The starting carrier may have for example the following characteristics:

(1) a pore size of 1 Å to 1000 Å,

(2) a specific surface of 1 $m^3/g$ or more e.g. up to 10,000 $m^2/g$

The pore size may for example be in the range of 20 Å to 200 Å; the specific area may for example, be in the range of 10 to 1000 $m^2/g$.

When using a composition in accordance with the present invention, the conditions of use should of course be such as to avoid the break-down or decomposition of the composition; i.e. conditions such as "pH, temperature, pressure, etc." should be chosen so as to avoid the break-down of the composition.

As indicated above, a composition, in accordance with the present invention, can be used to remove silver from a liquid medium. For example, the composition can be intermixed with a desired liquid medium for a suitable time, which will of course depend upon the amount of composition used, the initial silver concentration, the desired final silver concentration, etc. The silver loaded composition can then be physically recovered from the medium i.e. to effect separation of silver and medium. The affinity of the compounds for silver can be so great that even small amounts of silver can be removed from a liquid medium.

Liquid media to be treated to remove silver can have, for example, a pH in the range of 4.5 to 9. During the contact with the composition, the temperature of the mixture can for example range from 1°C to 50°C and the contact can occur under atmospheric pressure. Examples of different media which can be treated with the compositions are as follows:

(i) Photo processing effluents
- spent fixer solutions
- rinse water

(ii) Silver plating rinse water

As indicated previously, compositions in accordance with the present invention, may possibly be regenerated for further use by the removal of the metal therefrom by suitable chemical means. In this way, the composition can be economically used since it can be recycled for repeated use.

The regeneration, for example, of a composition loaded with silver may be carried out by treating the silver loaded composition with a suitable reagent such as thiourea. Appropriate reagents and conditions should of course be chosen which will not decompose the composition or destroy the metal binding capacity thereof.

The insoluble compositions in accordance with the present invention thus provides for the advantageous removal of silver from liquid media. The liquid media referred to herein may be aqueous, organic or mixtures thereof.

Reference will now be made to a number of non-restrictive examples which deal with embodiments of the present invention.

The methods of preparation used in the following example were analogous to those as described by H. Weetal & A.M. Filbert, Methods of Enzymology XXXIV B:59-72 1974.

In the following examples insoluble compositions were used to remove Ag from liquid media in accordance with the following procedure:

For the tests 1.57 cc of insoluble composition to be tested was initially placed in a 1.0 cm (i.d.) glass Bio-Rad Econo-column (i.e. bed height of about 2.0 cm). In order to minimize the photoactivated reductions of silver, all feed lines, feed bottles and columns were kept in the dark by wrapping same in aluminum foil. The composition was

then subjected to one or more of the following steps:

(a) Metal loading step:

The composition was washed with about 5 bed volumes of de-ionized water at maximum flow rate (up to 100 bed volumes per hour). Thereafter the composition was treated with 5 bed volumes of an appropriate silver conditioner (e.g. 5% w/w thiourea in 0.1 M nitric acid; prepared fresh) at a flow rate of about 10 bed volumes per hour.

The so treated composition was then washed again with de-ionized water as indicated above. Thereafter the solution to be treated was then passed through the column at a desired fixed flow rate (e.g. about 10 bed volumes per hour ) until the desired breakthrough point of the metal was observed in the column effluent (e.g. until the observed metal concentration in the effluent was 10% of the initial metal concentration). After the composition was thus saturated it was washed with ~5 bed volumes of deionized water to rinse off unbound metal.

(b) Regeneration step:

The metal loaded composition was treated with five bed volumes of appropriate silver regenerant (eg. 5% (w/w) thiourea in 0.1M nitric acid; prepared fresh) to remove Ag bound to composition; the volume of regenerant used was in excess of amount necessary to liberate all removable Ag from the composition.

The combined metal loading step and regeneration step represents a complete cycle for the reuse of the composition which can be represented as follows:

rinse → conditioner → rinse → metal → rinse → regenerant.

In the following examples, unless otherwise indicated the metal content of treated effluent was determined by atomic absorption spectrophotometric analysis and the metal content of the initial solution was determined by

inductively coupled plasma spectrometry. The residual concentration is the observed concentration of mercury in the treated effluent at the 50% point, i.e. the point at which about 1/2 of the total volume of treated solution had passed through the column, the total volume of treated solution being the volume of solution that had passed through the column up to desired breakthrough. The content of silver in the regenerant was compared to the quantity of silver originaly bound to the composition to determine efficiency of silver removal. Efficiency of regeneration can be calculated by comparing the capacity of the composition for silver in successive cycles.

In the following non-limiting examples nitrogen concentration of precursors was determined by a chloride titration technique: see L.C. Dorman, Tetrahedron Letters, 28, 2319 (1969).

Example 1: Silica gel: amino residues covalently bonded to the surface thereof.

Davison Grade 62 silica gel (140 Å pore; 340 sq. meters/gram) hereinafter referred to as Composition A (0.8 Kg) was suspended in 2.7 litres of ethanol (0.49 Kg; 4.9 mole). The suspension was maintained at room temperature for 20 minutes. 3-aminopropyltriethoxysilane (195g:88 mole; Union Carbide A-1100) was added slowly in a smooth stream over about 1 minute. The pH of the resulting suspension was adjusted to 3.45 with concentrated aqueous hydrochloric acid (0.35 litre, 4.2 mole) and warmed slightly during this addition. The mixture was heated to 76°C and maintained at that temperature for 3.0 hours. Thereafter the mixture was cooled to a manageable temperature (<50°C) and the solid product recovered therefrom was ethanol washed two times, each wash comprising suspending the solid product for about 10 to 15 minutes in about 2 litres of ethanol followed by recovery of the solid by vacuum filtration. The ethanol washed solid product was resuspended in 2.0 litre of aqueous 1 Molar hydrochloric acid. The resulting suspension was maintained

at room temperature for 1 hour. The solid product recovered therefrom was water washed 5 times, each wash comprising suspending the solid product for about 10 - 15 minutes in about 2 litres of deionized water followed by recovery of the solid product by vacuum filtration. The washed solid product was collected by vacuum filtration and dried in a forced air circulation oven at 110°C to constant weight (about 18 hours), the so obtained dry product hereinafter being referred to as Composition B. Analysis of nitrogen in Composition B by chloride titration showed a nitrogen concentration of 0.9 moles/Kg silica.

The above amination can generally be described graphically as follows:

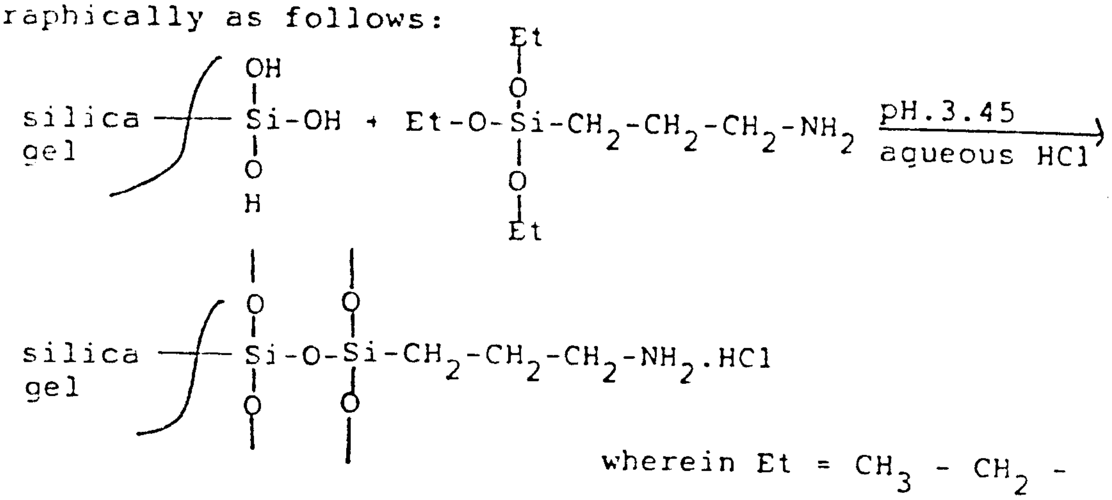


wherein Et = $CH_3 - CH_2 -$

Example 2:

(a) silica gel: aldehyde residue covalently bonded to the surface thereof.

A portion of the composition B obtained from example 1 (0.2 Kg, 0.9 mole of N per Kg) was suspended in 0.6 litres of a solution of 0.1 M disodium hydrogen phosphate. The system was degassed by application of water aspiration vacuum for fifteen minutes. The resulting suspension was adjusted to pH 7 with aqueous 10% sodium hydroxide solution and the system was degassed by application of water aspiration vacuum for several minutes. When gas evolution had ceased

the so evacuated system was filled with an argon atmosphere and 0.35 litres of an aqueous 25% solution of glutaraldehyde (0.87 moles; 4 equiv.) was added. The mixture was stirred at 20°C for 1.5 hours. Thereafter the obtained solid product which was orange-tan in colour was water washed five times, each wash step comprising suspending the solid product for 5 - 10 minutes in about 1 litre de-ionized water followed by recovery of the solid product (wet) by vacuum filtration. The so obtained product is hereinafter referred to as Composition C.

The reaction outlined above can be represented graphically as follows:

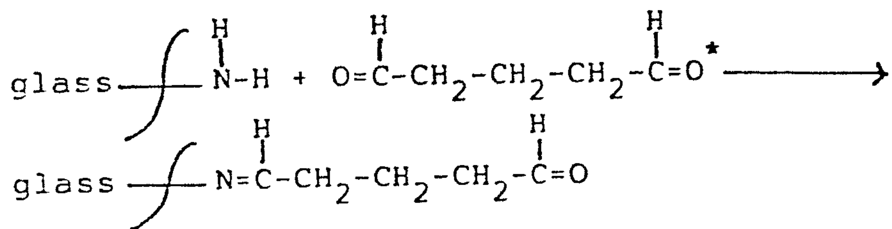

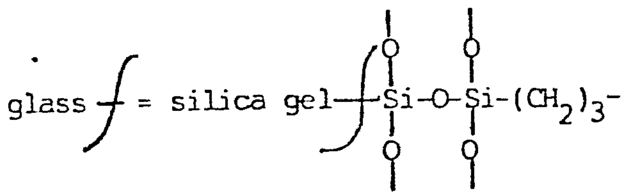

in the above

* stochiometric excess of 4:1

(b) silica gel: ethylenediamine residue covalently bonded to the surface thereof

One hundred grams of the washed wet solid product recovered in accordance with example 2 (a) above was resuspended in 200 ml of 0.3 M disodium hydrogen phosphate. The pH of this suspension was adjusted to 10.0 with 10% sodium hydroxide. A solution of ethylenediamine (3.3 g; 0.5 equiv; 0.055 mole) in 85 ml of 0.3 M disodium hydrogen phosphate was prepared, the pH adjusted to 10.0 with aqueous concentrated hydrochloric acid, and added slowly and smoothly over 3 hours to the stirred suspension at 65°C. The reaction mixture was stirred for 18 hours at 65°C. Thereafter

the obtained solid product was water washed twice, each wash step comprising suspending the solid product for 5 - 10 minutes in about 0.5 litres of deionized water. The solid product was obtained by vacuum filtration and is hereinafter referred to as Composition D. The reaction above can be represented graphically as follows:

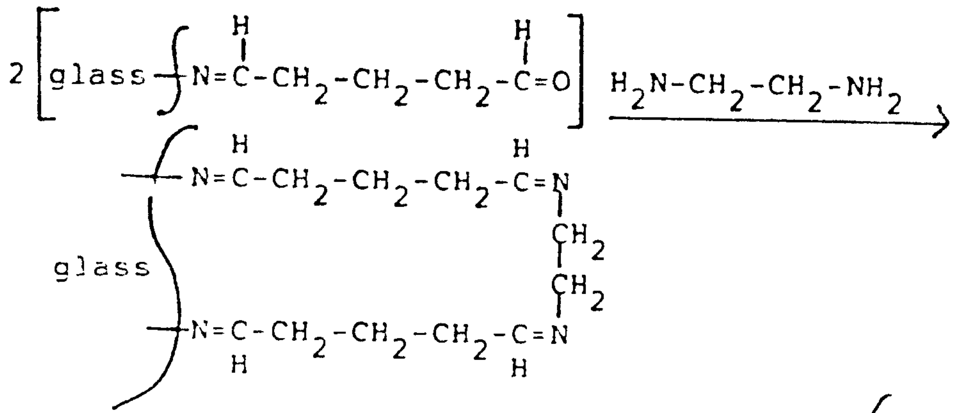

glass being as defined above

Example 3: Silica gel: Reduction of ethylenediamine residue covalently bonded to the surface thereof.

The washed solid product recovered in accordance with example 2 (b) above was resuspended in 0.2 litres of deionized water and the pH was adjusted to 8.5 with dilute sodium hydroxide solution. Sodium borohydride (12.5 g, 3.7 equiv., 0.33 mole) was added to the suspension slowly and the mixture was stirred for 1 hour at 25°C. The solid product was then washed consecutively with deionized water, 1 N hydrochloric acid and finally deionized water, each step comprising resuspending the solid product for 5 - 10 minutes in about 0.5 litres of water or acid, followed by recovery of the solid product (wet) by vacuum filtration. The obtained product is hereinafter referred to as Composition E.

A portion of Composition E was again subjected to the above reduction step and the product obtained from the second reduction is hereinafter referred to as Composition F. A portion of Composition F was likewise again subjected to the above reduction step and the product obtained from the third reduction is hereinafter referred to as Composition G. The Compositions E, F and G thus differ with respect to their exposure time to the reducing agent (see table 2 infra). The reaction outlined above can be represented graphically as follows.

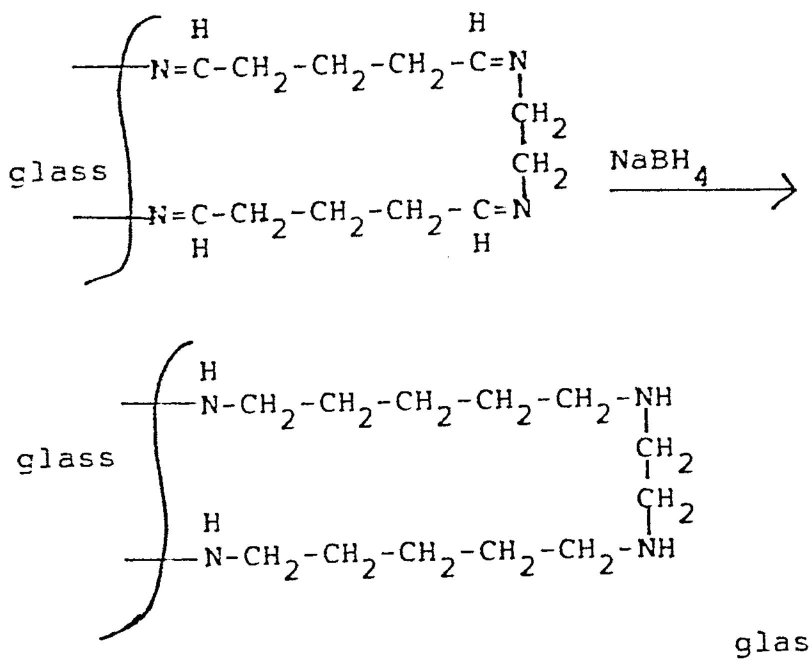


glass being as defined above

Example 4:

Tests were conducted to evaluate the contribution of the ethylenediamine residues with respect to the capture of Ag and also the effect of reduction of the ethylenediamine residue on the removal of silver by an insoluble composition provided with such residue. The silver containing solution consisted of an aqueous solution of wastewater of pH 5.25 containing the following elements:

| METAL | METAL CONCENTRATION* |
|---|---|
| Ag | 50.0 mg/L |
| Al | 4.1 mg/L |
| Na | 62 mg/L |
| B | 5.3 mg/L |
| Ca | 1.4 mg/L |

* by inductively coupled plasma spectrometric analysis

A first series of tests were conducted using Composition A, Composition B, Composition C and Composition D. As can be seen from table 1 below, Compositions A, B, and C which are precursors for Composition D have a significantly lower capacity to take up Ag in relation to Composition D which includes the ethylenediamine residue.

In another series of tests, Compositions E, F and G were used to treat the above wastewater. Each of these Compositions, as indicated above, was reduced, with sodium borohydride, to different degrees in order to examine the effect of reduction on the silver removal efficiency of the ethylenediamine residue. The results are seen in table 2.

TABLE 1

Silver uptake

| Composition | Ag concentration (ppm)[a] | | Metal uptake ( mg Ag bound/L composition ) to 10% breakthrough |
|---|---|---|---|
| | untreated solution | treated solution - residual concentration (b) | |
| A | 50 | 50.0 | 0 |
| B | 50 | .05 | 3920 |
| C | 50 | .05 | 3690 |
| D | 50 | .05 | 5800 |

(a) concentration determined by atomic absorption spectrophotometry

(b) residual concentration defined as metal concentration in treated effluent at the 50% point between initial elution of treated effluent and 10% breakthrough

TABLE 2

The effect of degree of reduction on silver removal

| Composition | Na Borohydride Exposure Time (Hrs.) (c) | Ag. concentration (ppm)[a] | | metal uptake (mg Ag bound/L composition) to 10% breakthrough |
|---|---|---|---|---|
| | | untreated solution | treated solution - residual concentration (b) | |
| D | 0 | 50 | .05 | 5800 |
| E | 1 | 50 | .04 | 9300 |
| F | 2 | 50 | .01 | 10940 |
| G | 3 | 50 | .01 | 11600 |

(a) concentration determined by atomic absorption spectrophotometry

(b) residual concentration defined as metal concentration in treated effluent at the 50% point between initial elution of treated effluent and 10% breakthrough.

(c) Sodium borohydride concentration = 1.26 Molar

Example 5 :

Tests were conducted in accordance with the method outlined previously using ethylenediamine Composition G wherein the composition was subjected to a number of complete cycles, i.e. a number of metal loading/regeneration steps one after the other. The solution treated was the same as that described in example 4 above.

The regenerant used was thiourea (5% w/w) in 0.1 M nitric acid. The flow rate used was 10 BV/hr.

The results of the tests are shown in Table 3 below:

TABLE 3

| Cycle no. | Ag. concentration (ppm)[a] untreated solution | treated solution residual concentration (b) | Metal uptake (mg Ag/Litre composition) to 10% breakthrough |
|---|---|---|---|
| 1 | 50 | 0.01 | 11600 |
| 2 | 50 | 0.05 | 12200 |
| 3 | 50 | 0.06 | 12100 |

(a) concentration determined by atomic absorption spectrophotometry

(b) residual concentration defined as metal concentration in treated effluent at the 50% point between initial elution of treated effluent and 10% breakthrough.

Example 6:

A number of tests were conducted with ethylenediamine Composition G using the metal loading step outlined previously, using various types of solutions containing Ag. The results of the tests are outlined in table 4, the composition of the solutions being outlined in table 4 below.

TABLE 4

| Solution (a) | Ag conc. (ppm) (b) untreated solution | Ag conc. (ppm) (b) treated solution residual conc (c) | Ag uptake mg/litre composition to 10% breakthrough |
|---|---|---|---|
| I | 25.1 | 0.08 | 462 |
| II | 20 | 0.01 | 730 |
| III | 50 | 0.01 | 1314 |
| IV | 27.0 | 0.01 | 718 |

(a) see table 5 below for elemental analysis.

(b) analysis by atomic absorption spectrophotometry.

(c) residual concentration defined as metal concentration in treated effluent at the 50% point between initial elution of treated effluent and 10% breakthrough.

TABLE 5

| Solution No. | Nature of Solution | pH | Element | Conc.[a] |
|---|---|---|---|---|
| I | wash water following color fix | 6.7 | Ag | 25.1 ppm[b] |
| | | | Mg | 5.31 ppm |
| | | | Cu | 180 ppb |
| | | | Na | 74.4 ppm |
| | | | Sr | 111 ppb |
| | | | B | 150 ppb |
| | | | Ca | 27 ppm |
| II | Mock X-Ray rinse water | 8.0 | Ag | 20 ppm[b] |
| III | Diluted Fixer/ Developer | 5.25 | Ag | 50 ppm[b] |
| | | | Al | 4.1 ppm |
| | | | Na | 62 ppm |
| | | | B | 5.3 ppm |
| | | | Ca | 1.4 ppm |
| IV | Diluted (1:100) Fixer solution from black and white process | N.D.[c] | Ag | 27.0 ppm[b] |
| | | | Al | 7.0 ppm |
| | | | Fe | 800 ppb |
| | | | Sn | 500 ppb |
| | | | Mg | 125 ppb |
| | | | Mn | |
| | | | Cu | |
| | | | Sr | |

(a) analysis by inductively coupled plasma emission spectrometry

(b) analysis by atomic absorption spectrophotometry

(c) N.D. not determined

## CLAIMS



1. An insoluble composition comprising:
(1) ethylenediamine covalently fixed to the surface of
(2) a suitable insoluble carrier,
characterized in that ethylenediamine is fixed to the surface of said carrier by each nitrogen atom thereof, each of said nitrogen atoms being fixed to the surface of the carrier by a separate covalent linkage comprising a chain of atoms, the first three chain atoms immediately adjacent a respective nitrogen atom being carbon atoms.

2. An insoluble composition comprising:
(1) ethylenediamine covalently fixed to the surface of
(2) a suitable insoluble carrier,
characterized in that ethylenediamine is fixed to the surface of said carrier by each nitrogen atom thereof, each of said nitrogen atoms being fixed to the surface of the carrier by a separate covalent linkage comprising a chain of atoms, each said chain including an additional nitrogen atom covalently linked to a respective nitrogen atom of ethylenediamine by a hydrocarbon chain of five carbon atoms.

3. An insoluble composition as defined in claim 2, characterized in that said hydrocarbon chain comprises a chain of five methylene groups and wherein said additional nitrogen atom and the respective nitrogen atom of ethylenediamine are each linked to said hydrocarbon by a single covalent bond.

4. An insoluble composition as defined in claim 1, 2 or 3, characterized in that the carrier is a suitable insoluble inorganic carrier.

5. An insoluble composition as defined in claim 1, 2 or 3, characterized in that the carrier is silica gel.

6. A process for the preparation of an insoluble composition comprising:

(1) ethylenediamine covalently fixed to the surface of

(2) a suitable insoluble carrier,

characterized in that ethylenediamine is fixed to the surface of said carrier by each nitrogen atom thereof, each of said nitrogen atoms being fixed to the surface of the carrier by a separate covalent linkage comprising a chain of atoms, the first three chain atoms immediately adjacent a respective nitrogen atom being carbon atoms, said process being characterized in that ethylenediamine is reacted with a suitable reactive insoluble carrier to obtain an insoluble composition as defined above.

7. A process as defined in claim 6, characterized in that ethylenediamine is subjected to a Schiff base reaction with a suitable aldehyde activated insoluble carrier, each of the aldehyde functional groups, $-\overset{\overset{O}{\|}}{C}-H$, of the carrier being fixed to the surface of the carrier by a chain of atoms, the first two atoms of said chain immediately adjacent a respective aldehyde functional group being carbon atoms, and, if desired, the obtained product is subjected to a Schiff base reduction treatment with a suitable reducing agent, to obtain an insoluble composition as defined above.

8. A process for the preparation of an insoluble composition comprising:

(1) ethylenediamine covalently fixed to the surface of

(2) a suitable insoluble carrier,

characterized in that ethylenediamine is fixed to the surface of said carrier by each nitrogen atom thereof, each of said nitrogen atoms being fixed to the surface of the carrier by a separate covalent linkage comprising a chain of atoms, each said chain including an additional nitrogen atom covalently linked to a respective nitrogen atom of ethylenediamine by a hydrocarbon chain of five carbon atoms, said process being characterized in that ethylenediamine is

subjected to a Schiff base reaction with a suitable aldehyde activated insoluble carrier, each of the aldehyde functional groups $-\overset{O}{\overset{\parallel}{C}}-H$ of said carrier being fixed to the surface of the carrier by a chain of atoms, each said chain including a nitrogen atom covalently linked to a respective $-\overset{O}{\overset{\parallel}{C}}-H$ group by a hydrocarbon chain of four carbon atoms, and, if desired, the obtained product is subjected to a Schiff base reduction treatment with a suitable reducing agent to obtain an insoluble composition as defined above.

9. A process for the preparation of an insoluble composition comprising:

(1) ethylenediamine covalently fixed to the surface of

(2) a suitable insoluble carrier,

characterized in that ethylenediamine is fixed to the surface of said carrier by each nitrogen atom thereof, each of said nitrogen atoms being fixed to the surface of the carrier by a separate covalent linkage comprising a chain of atoms, each said chain including an additional nitrogen atom covalently linked to a respective nitrogen atom of ethylenediamine by a hydrocarbon chain of five methylene groups and wherein said additional nitrogen atom and the respective nitrogen atom of ethylenediamine are each linked to said hydrocarbon chain by a single covalent bond, said process being characterized in that

(a) a suitable amino activated insoluble carrier having amino groups covalently fixed to its surface is subjected to a Schiff base reaction with glutaraldehyde to obtain an aldehyde activated carrier, each of the aldehyde functional groups $-\overset{O}{\overset{\parallel}{C}}-H$ of said carrier being fixed to the surface of the carrier by a chain

of atoms, each said chain including a nitrogen atom covalently linked to a respective $-\overset{O}{\overset{\|}{C}}-H$ group by a hydrocarbon chain of four carbon atoms and

(b) said aldehyde activated carrier is then subjected to a Schiff base reaction with ethylenediamine and the obtained product is subjected to a Schiff base reduction treatment with a suitable reducing agent, to obtain an insoluble composition as defined above.

10. A process for removing silver from a liquid medium, said silver being in the form of a soluble compound thereof, characterized in that said medium is contacted with an insoluble composition comprising:

(1) ethylenediamine covalently fixed to the surface of

(2) a suitable insoluble carrier,

said insoluble composition being characterised in that ethylenediamine is fixed to the surface of said carrier by each nitrogen atom thereof, each of said nitrogen atoms being fixed to the surface of the carrier by a separate covalent linkage comprising a chain of atoms, the first three chain atoms immediately adjacent a respective nitrogen atom being carbon atoms.

11. A process for removing silver from a liquid medium, said silver being in the form of a soluble compound thereof, characterized in that said medium is contacted with an insoluble composition comprising:

(1) ethylenediamine covalently fixed to the surface of

(2) a suitable insoluble carrier,

said insoluble composition being characterized in that ethylenediamine is fixed to the surface of said carrier by each nitrogen atom thereof, each of said nitrogen atoms being fixed to the surface of the carrier by a separate covalent linkage comprising a chain of atoms, each said

chain including an additional nitrogen atom covalently linked to a respective nitrogen atom of ethylenediamine by a hydrocarbon chain of five carbon atoms.

12. A process as defined in claim 11, characterized in that said hydrocarbon chain comprises a chain of five methylene groups and wherein said additional nitrogen atom and the respective nitrogen atom of ethylenediamine are each linked to said hydrocarbon chain by a single covalent bond.

13. A process as defined in claim 10, 11 or 12, characterized in that the medium is an aqueous liquid medium.

14. A process as defined in any one of claims 6 to 13, characterized in that the carrier is silica gel.